# EUROPEAN PATENT APPLICATION

(11) **EP 4 464 204 A1**
(43) Date of publication of application: **20.11.2024**
(21) Application number: 22919980.7
(22) Date of filing: 09.12.2022
(51) Int. Cl.: A47J 27/00

(54) **COOKING APPARATUS**

(30) Priority: 17.01.2022 CN 202220117574 U
(71) Applicant: Shenzhen Botinkit Co., Ltd., Shenzhen, Guangdong 518000 (CN)
(72) Inventor: LIU, Fuzhuang, Shenzhen, Guangdong 518000 (CN); FU, Qiang, Shenzhen, Guangdong 518000 (CN); GUAN, Chenyu, Shenzhen, Guangdong 518000 (CN)
(74) Representative: Cleanthous, Marinos
(86) International application number: PCT/CN2022/137749
(87) International publication number: WO 2023/134347

(57) **Abstract**

The present application discloses a cooking device, which comprises a pot body and a heating apparatus, wherein the heating apparatus is arranged at an outer periphery of the pot body, a preset distance is provided between the heating apparatus and the outer periphery of the pot body, and the preset distance ranges from 15 mm to 20 mm. According to the present application, the heating apparatus of the cooking device is arranged at an outer periphery of the pot body, a preset distance is provided between the heating apparatus and the outer periphery of the pot body, and the preset distance ranges from 15 mm to 20 mm. In this way, when the heating apparatus heats the pot body, the preset distance can effectively improve the air convection effect of a heat radiation fan and significantly improve the heat radiation effect of the heating member.

## Description

### TECHNICAL FIELD

An embodiment of the present application relates to the technical field of cooking utensils, and in particular, to a cooking device.

### BACKGROUND

With the acceleration of pace of life, more and more people need a cooking device that can automatically perform stir-frying so as to free hands, and is convenient and fast. An automatic stir fry machine is controlled by a microcomputer to achieve automatic stir-frying without human supervision. It achieves multiple uses of one pot, saves time and labor, and is free of oily smoke. Therefore, this automatic stir fry machine is favored by more and more users.

In the prior art, the heating apparatus of the pot body generally uses a heating coil to heat the pot body and generates heat through electromagnetic induction. However, the heat radiation of the pot body, i.e., the heat generated by the heating coil, can increase the temperature of the heating coil, thereby affecting the service life of the coil and the fixing frame. Therefore, the temperature of the pot body is not easy to control and the service life of the heating apparatus is affected.

### SUMMARY

An embodiment of the present application provides a cooking device, which aims to improve the heating uniformity of a heating apparatus of the cooking device and improve the service life of the heating apparatus.

To achieve the objective, the present application adopts the following technical solutions.

A cooking device comprises a pot body and a heating apparatus, wherein the heating apparatus is arranged at an outer periphery of the pot body, a preset distance is provided between the heating apparatus and the outer periphery of the pot body, and the preset distance ranges from 15 mm to 20 mm.

In an embodiment, the heating apparatus comprises a fixing frame and a heating member, the fixing frame is covered on an outer side of the pot body, and the heating member is fixed on the fixing frame.

In an embodiment, the heating member is formed by coiling a heating wire on the fixing frame, and the heating member comprises a cylindrical surface matching a shape of an upper part of the pot body and a cylindrical or spherical surface matching a shape of a lower part of the pot body.

In an embodiment, the fixing frame comprises an upper fixing frame and a lower fixing frame arranged up and down, the upper fixing frame matches the shape of the upper part of the pot body, and the lower fixing frame matches the shape of the lower part of the pot body.

In an embodiment, one surface of the upper fixing frame adjacent to the pot body is a cylindrical surface, and/or one surface of the lower fixing frame adjacent to the pot body is a cylindrical or spherical surface.

In one embodiment, the fixing frame is made of a heat-resistant material.

In an embodiment, at least one side of the fixing frame is provided with a fixing edge, and at least one fixing hole is provided on the fixing edge.

In an embodiment, the heating member is a circular structure or an elliptical structure formed by coiling a heating wire on the fixing frame.

In an embodiment, the cooking device further comprises a shield cover, wherein the shield cover surrounds an outer periphery of the heating member.

In an embodiment, the shield cover is made of a conductive material.

The present application has the following beneficial effects:

According to the present application, the heating apparatus of the cooking device is arranged at an outer periphery of the pot body, a preset distance is provided between the heating apparatus and the outer periphery of the pot body, and the preset distance ranges from 15 mm to 20 mm. In this way, when the heating apparatus heats the pot body, the preset distance can effectively improve the air convection effect of a heat radiation fan and significantly improve the heat radiation effect of the heating member, which can not only ensure the heating effect of the heating apparatus on the pot body, but also improve the service life of the heating apparatus and even the entire cooking device.

### BRIEF DESCRIPTION OF DRAWINGS

To illustrate the technical solutions in the embodiments of the present application or in the prior art more clearly, the accompanying drawings needed to be used in the description of the embodiments or in the prior art are briefly introduced below. It is clear that the accompanying drawings in the following descriptions are some embodiments of the present application, and those of ordinary skill in the art may still derive other drawings from these accompanying drawings without creative efforts.
FIG. 1 is a schematic diagram of a structure of a pot body and a heating apparatus according to an embodiment of the present application;
FIG. 2 is a schematic diagram I of a structure of a heating apparatus according to Embodiment I of the present application;
FIG. 3 is a schematic diagram II of a structure of a heating apparatus according to Embodiment I of the present application; and
FIG. 4 is a schematic diagram of a structure of a heating apparatus according to Embodiment II of the present application.

In the drawings, 10: pot body, 20: heating apparatus, 22: heating member, 24: fixing frame, 242: upper fixing frame, 244: lower fixing frame, 266: fixing edge, 268: fixing hole, and 28: shield cover.

### DETAILED DESCRIPTION OF EMBODIMENTS

To make the objectives, technical solutions and advantages of the present application clearer, the technical solution of the present application will be described in detail through implementations with reference to the accompanying drawings in the embodiments of the present application. It is clear that the described embodiments are merely some rather than all of embodiments of the present application, and the embodiments of the present application and features in the embodiments can be combined with each other without conflict. All other embodiments obtained by those of ordinary skill in the art based on embodiments of the present application without creative efforts shall fall within the protection scope of the present application.

It should be noted that, in the accompanying drawings, the same or similar reference numerals indicate the same or similar elements or elements having the same or similar functions throughout; in descriptions of the present invention, the directions or positional relationships indicated by terms "central", "longitudinal", "lateral", "front", "rear", "left", "right", "vertical", "horizontal", "top", "bottom", "inner", "outer", and the like are those shown based on the accompanying drawings, and are merely intended to facilitate and simplify description of the present application rather than indicate or imply that the indicated apparatus or element must have a specific direction and must be configured and operated according to the specific direction, and therefore, these directions or positional relationships should not be construed as limiting the present invention; and in descriptions of the present application, "first", "second", and the like are only used to distinguish each other, rather than to indicate the importance and order.

In descriptions of the present application, unless otherwise expressly specified and limited, terms "mount", "interconnect", and "connect" should be understood in a broad sense. For example, such terms may indicate a fixed connection, a movable connection, or a detachable connection; may indicate a mechanical connection or an electrical connection; and may indicate direct interconnection, indirect interconnection through an intermediate medium, or internal communication between two elements. Those of ordinary skill in the art may understand specific meanings of the foregoing terms in the present application based on a specific situation.

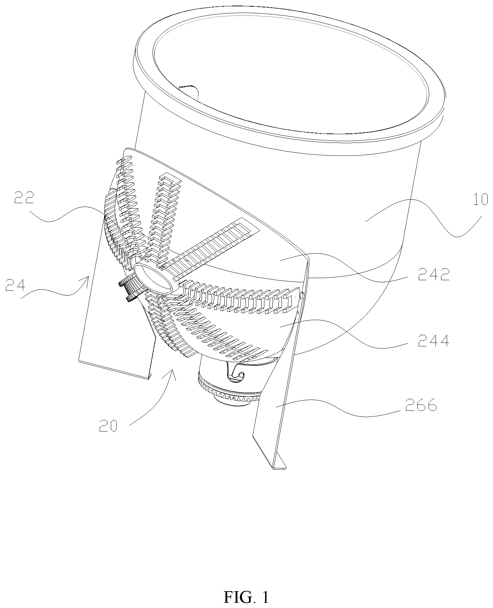

As shown in FIG. 1, a cooking device comprises a pot body 10 and a heating apparatus 20, wherein the heating apparatus 20 is arranged at an outer periphery of the pot body 10 and matches a shape of the pot body 10, a preset distance is provided between the heating apparatus 20 and the outer periphery of the pot body 10, and the preset distance ranges from 15 mm to 20 mm.

The heating apparatus 20 of the cooking device is arranged at the outer periphery of the pot body 10, a shape of the heating apparatus 20 matches the shape of the pot body 10, a preset distance is provided between the heating apparatus 20 and the outer periphery of the pot body 10, and the preset distance ranges from 15 mm to 20 mm. In this way, when the heating apparatus 20 heats the pot body 10, the preset distance can reduce the heat conduction between the heating apparatus 20 and the pot body 10, which can not only ensure the heating effect of the heating apparatus 20 on the pot body 10, but also increase the service life of the heating apparatus and even the entire cooking device.

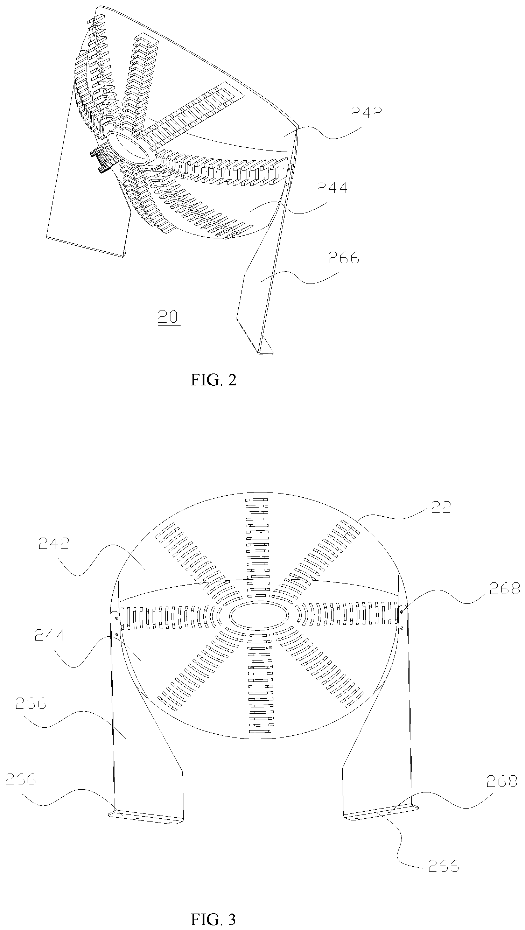

As shown in FIGs. 2 and 3, the heating apparatus 20 comprises a fixing frame 24 and a heating member 22, the fixing frame 24 is covered on an outer side of the pot body 10, and the heating member 22 is fixed on the fixing frame 24. In the embodiment of the present application, a distance between an outer diameter of the pot body and an inner diameter of the heating member 26 ranges from 15 mm to 20 mm. The heating member 22 is arranged on the outer periphery of the pot body 10 through the fixing frame 24 to heat the pot body 10.

The heating member 22 is a circular structure or an elliptical structure formed by coiling a heating wire on the fixing frame 24. When being wound on the fixing frame 24, the heating wire is attached to and wound on the fixing frame 24, and the winding mode can adopt a radiation type winding mode as shown in FIG. 2 or FIG. 3 to form a circular or elliptical heating wire heating area; or a bracket is wound in a circle to form a circular or elliptical heating wire heating area. In any winding mode, the winding needs to be smooth without edges and corners. The highest point of the heating member 22 should not be too high (too close to the upper edge of the pot body 10), so that the phenomenon of dry burning of the pot body is avoided. The width of the heating member 22 (i.e., the direction around the circumference of the pot body 10) is not limited, and can be increased as much as possible based on a requirement to increase the heating area of the pot body 10 and improve the heating efficiency.

The heating member 22 comprises a cylindrical surface matching a shape of an upper part of the pot body and a cylindrical or spherical surface matching a shape of a lower part of the pot body 10. When the pot body 10 is a cylindrical structure from top to bottom, an upper part of one surface of the heating member 22 formed by coiling the heating wire close to the pot body is a cylindrical structure matching the shape of the pot body 10, and a lower part of one surface of the heating member 22 close to the pot body is a cylindrical structure matching the shape of the pot body 10. When the shape of the pot body 10 is a spherical kettle-shaped structure, it can be understood that the spherical kettle-shaped structure is formed by combining the cylindrical structure of the upper part and the spherical structure of the lower part, and then the upper part of one surface of the heating member 22 close to the pot body is adaptively changed. That is, the shape of the upper part of one surface of the heating member 22 close to the pot body is configured as a cylindrical surface, and the shape of the lower part of one surface of the heating member 22 close to the pot body 10 is configured as a spherical surface. The present application ensures the same distance between the heating member 22 and the pot body 10 by designing the shape of the heating member 22 according to different shapes of the pot body 10, thereby maintaining the stability of heating.

In this embodiment, the fixing frame 24 comprises an upper fixing frame 242 and a lower fixing frame 244 arranged up and down, the upper fixing frame 242 matches the shape of the upper part of the pot body 10, and the lower fixing frame 244 matches the shape of the lower part of the pot body 10. When the pot body 10 is a cylindrical structure from top to bottom, an upper fixing frame 242 and a lower fixing frame 244 are both cylindrical structures matching the shape of the pot body 10. That is, one surface of the upper fixing frame 242 close to the pot body 10 is a cylindrical surface, and one surface of the lower fixing frame 244 close to the pot body 10 is also a cylindrical surface. When the shape of the pot body 10 is a spherical kettle-shaped structure, it can be understood that the spherical kettle-shaped structure is formed by combining the cylindrical structure of the upper part and the spherical structure of the lower part, then the shape of the upper fixing frame 242 matching the cylindrical structure of the pot body 10 is configured as a cylindrical surface, and the shape of the lower fixing frame 244 matching the spherical structure of the pot body 10 is configured as a spherical surface. The present application designs the fixing frame 24 in sections according to the different shapes of the pot body 10, thereby changing the shape of the heating member 22 fixed on the fixing frame, which ensures the same distance between the heating member 22 and the pot body 10 and maintains the stability of heating.

At least one side of the fixing frame 24 is provided with a fixing edge 266, and at least one fixing hole 268 is provided on the fixing edge 266. Fixing members such as screws and bolts pass through the fixing holes 268 to fix the fixing frame 24 and the pot body assembly. That is, the fixing frame 24 is fixed on the outer periphery of the pot body 10 of the cooking device.

The fixing frame 24 is made of a heat-resistant material, preferably engineering plastics or nylon or other heat-resistant plastics. When the heating apparatus 20 is working, the serve life of the fixing frame 24 will not be affected by the long-term high-temperature working environment.

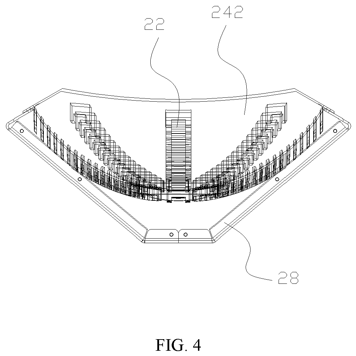

As shown in FIG. 4, the heating apparatus 20 further comprises a shield cover 28, wherein the shield cover 28 surrounds an outer periphery of the heating apparatus 20. Shield cover fixing edges extend from two sides of the shield cover 28, shield cover fixing holes are provided on the shield cover fixing edges, and fixing members such as screws and bolts pass through the shield cover fixing holes to fix the shield cover and the pot body assembly. The shield cover 28 can well surround the heating member 22, and even the entire heating area, to shield electromagnetic fields and prevent the heating member 22 from heating the metal shell outside the heating member. Preferably, the shield cover 28 is a segmented structure or an arc-shaped structure to adapt to the outer periphery of the arc-shaped pot body, and the height of the shield cover is equivalent to the height of the heating member 22. The shield cover 28 is made of a material with good electrical conductivity, preferably a material with good electrical conductivity such as metal aluminum, copper and alloys thereof.

The fixing frame 24 is made of a heat-resistant material. Preferably, engineering plastics, nylon or the like are adopted.

It should be noted that the foregoing are merely some embodiments of the present application and applied technical principles. Those skilled in the art may understand that the present application is not limited to specific embodiments described herein, and those skilled in the art may make various significant changes, readjustments, and replacements without departing from the protection scope of the present application. Therefore, although the present application is described in detail by using the foregoing embodiments, the present application is not limited to the foregoing embodiments, and may further include more other equivalent embodiments without departing from the concept of the present application. The scope of the present application is determined by the scope of the appended claims.

## Claims

1. A cooking device, comprising a pot body and a heating apparatus, wherein the heating apparatus is arranged at an outer periphery of the pot body, a preset distance is provided between the heating apparatus and the outer periphery of the pot body, and the preset distance ranges from 15 mm to 20 mm.

2. The cooking device according to claim 1, wherein the heating apparatus comprises a fixing frame and a heating member, the fixing frame is covered on an outer side of the pot body, and the heating member is fixed on the fixing frame.

3. The cooking device according to claim 1, wherein the heating member is formed by coiling a heating wire on the fixing frame, and the heating member comprises a cylindrical surface matching a shape of an upper part of the pot body and a cylindrical or spherical surface matching a shape of a lower part of the pot body.

4. The cooking device according to claim 2, wherein the fixing frame comprises an upper fixing frame and a lower fixing frame arranged up and down, the upper fixing frame matches the shape of the upper part of the pot body, and the lower fixing frame matches the shape of the lower part of the pot body.

5. The cooking device according to claim 4, wherein one surface of the upper fixing frame adjacent to the pot body is a cylindrical surface, and/or one surface of the lower fixing frame adjacent to the pot body is a cylindrical or spherical surface.

6. The cooking device according to claim 2, wherein the fixing frame is made of a heat-resistant material.

7. The cooking device according to claim 2, wherein at least one side of the fixing frame is provided with a fixing edge, and at least one fixing hole is provided on the fixing edge.

8. The cooking device according to claim 2, wherein the heating member is a circular structure or an elliptical structure formed by coiling a heating wire on the fixing frame.

9. The cooking device according to claim 1, further comprising a shield cover, wherein the shield cover surrounds an outer periphery of the heating member.

10. The cooking device according to claim 9, wherein the shield cover is made of a conductive material.
